# EUROPÄISCHE PATENTANMELDUNG

(11) **EP 3 708 284 A1**
(43) Veröffentlichungstag der Anmeldung: **16.09.2020**
(21) Anmeldenummer: 20165281.5
(22) Anmeldetag: 16.07.2012
(51) Int. Cl.: B23D 61/00

(54) **SÄGEBLATT FÜR EINE WERKZEUGMASCHINE**

(30) Priorität: 07.09.2011 DE 102011082228
(62) Teilanmeldung aus: 12735875.2
(71) Anmelder: Robert Bosch GmbH, 70442 Stuttgart (DE)
(72) Erfinder: Bozic, Milan, 4542 Luterbach (CH)

(57) **Zusammenfassung**

Die Erfindung betrifft ein Sägeblatt (1) mit einem kreissegmentförmigen oder zumindest annähernd rechteckförmigen Stammblatt (2), das eine teilkreisförmig ausgebildete Schneidkante (4) aufweist, wobei in einen mit dem Stammblatt (2) verbundenen Befestigungsabschnitt (3) eine Befestigungsausnehmung (5) zur Aufnahme einer Werkzeugwelle (6) eingebracht ist und eine Drehachse (7) durch die Befestigungsausnehmung (5) verläuft. Es wird vorgeschlagen, dass die Schneidkante (4) einen Radius (R) aufweist, der den Abstand zwischen der Drehachse (7) des Sägeblatts (1) und der Schneidkante (4) übersteigt, wobei der Mittelpunkt (9) des Radius (R) der Schneidkante (4) außerhalb des Befestigungsabschnitts (3) liegt, und wobei der Radius (R) zumindest das 1,25-fache des Abstand zwischen Drehachse und der Schneidkante (4) beträgt.

## Beschreibung

Die Erfindung bezieht sich auf ein Sägeblatt, insbesondere ein Drehoszillationssägeblatt für eine Werkzeugmaschine, nach dem Oberbegriff des Anspruches 1.

### Stand der Technik

Aus der DE 203 08 797 U1 ist ein Sägeblatt für eine Säge mit drehoszillierender Antriebsbewegung bekannt. Das Sägeblatt weist ein etwa rechteckförmiges Stammblatt auf, das einteilig mit einem Befestigungsabschnitt ausgebildet ist, in den eine Ausnehmung zur Aufnahme der Werkzeugwelle der Säge eingebracht ist. Auf der der Ausnehmung abgewandten Seite ist das Stammblatt mit einer Schneidkante versehen, die zur Werkstückbearbeitung dient und als geradlinige Kante mit Schneidzähnen versehen ist.

Bei geradlinigen Schneidkanten kann das Problem auftreten, dass die Eckbereiche sich bei der Bearbeitung im Material des Werkstückes verhaken können. Bei der Umkehrung der Drehrichtung befindet sich nur der Eckbereich in Kontakt mit dem Werkstück, so dass die Schneidkante einer ungleichmäßigen Belastung unterworfen ist.

In der EP 0 695 607 A1 wird ein Sägeblatt für eine Knochensäge mit Drehoszillationsantrieb beschrieben. Das Sägeblatt ist ebenfalls etwa rechteckförmig ausgebildet und weist eine teilkreisförmig gebogene Schneidkante mit Schneidzähnen auf, wobei der Radius der Schneidkante dem Abstand zur Drehachse entspricht. Die teilkreisförmige Ausführung der Schneidkante führt zwar zu einer gleichmäßigeren Belastung der Schneidezähne, allerdings werden beim Wechsel der Drehrichtung die bei der Bearbeitung entstehenden Späne nicht in optimaler Weise aus dem Schnittbereich abgeführt.

### Offenbarung der Erfindung

Der Erfindung liegt die Aufgabe zugrunde, ein Sägeblatt mit einer teilkreisförmigen Schneidkante so auszubilden, dass das Sägeblatt eine lange Lebensdauer aufweist und bei der Werkstückbearbeitung entstehende Späne besser abgeleitet werden.

Diese Aufgabe wird erfindungsgemäß mit den Merkmalen des Anspruches 1 gelöst. Die Unteransprüche geben zweckmäßige Weiterbildungen an.

Das erfindungsgemäße Sägeblatt kann in der Werkzeugmaschine, insbesondere in Handwerkzeugmaschinen eingesetzt werden, die mit einem Drehoszillationsantrieb versehen sind, so dass das Sägeblatt im Betrieb eine oszillierende Drehbewegung ausführt. Das Sägeblatt weist ein Stammblatt auf, das mit einer gebogenen, insbesondere teilkreisförmigen oder polygonförmigen Schneidkante versehen ist. Das Stammblatt ist kreissegmentförmig oder rechteckförmig bzw. annähernd rechteckförmig ausgebildet, beispielsweise trapezförmig. Das Stammblatt ist mit einem Befestigungsabschnitt verbunden, über den das Sägeblatt lösbar mit der Werkzeugwelle der Werkzeugmaschine verbunden wird. Der Befestigungsabschnitt ist entweder einteilig mit dem Stammblatt ausgebildet oder als separates Bauteil ausgeführt, das aber fest mit dem Stammblatt verbunden ist. Gegebenenfalls ist das Sägeblatt abgekröpft, so dass das Stammblatt und der Befestigungsabschnitt in parallel versetzten Ebenen liegen. In Betracht kommt aber auch eine Ausführung, in der das Stammblatt und der Befestigungsabschnitt in einer gemeinsamen Ebene liegen. Vorteilhafterweise sind in jedem Fall sowohl das Stammblatt als auch der Befestigungsabschnitt als ebene bzw. plattenförmige Bauteile ausgeführt.

Die gebogene Schneidkante ist weniger stark gekrümmt als ein Kreisbogen mit einem Radius, der dem Abstand zwischen der Drehachse des Sägeblatts und der Schneidkante entspricht. Im Falle einer teilkreisförmigen Schneidkante ist der Radius der Schneidkante am Stammblatt größer als der Abstand zwischen der Drehachse des Sägeblatts und der Schneidkante. Die Drehachse ist durch den Befestigungsabschnitt geführt, insbesondere durch die Befestigungsausnehmung im Befestigungsabschnitt, durch die im montierten Zustand die Werkzeugwelle geführt ist; die Drehachse des Sägeblatts fällt im montierten Zustand mit der Wellenachse der Werkzeugwelle zusammen.

Die teilkreisförmige Schneidkante weist somit einen gegenüber bekannten Ausführungen vergrößerten Radius auf. Der größere Radius im Vergleich zum Abstand zwischen der Drehachse des Sägeblatts und der Schneidkante führt dazu, dass bei der Werkstückbearbeitung bei einer Drehrichtungsumkehrung ein keil- bzw. spaltförmiger Freiraum zwischen den Schneidzähnen und dem Werkstück besteht, über den die bei der Werkstückbearbeitung anfallenden Späne leichter abgeführt werden können. Trotzdem erhält man eine gleichmäßigere Belastung der Schneidkante als bei geradlinigen Schneidkanten; die Belastung entspricht annähernd derjenigen mit Teilkreisform, deren Radiusmittelpunkt mit der Drehachse des Sägeblatts zusammenfällt. Insgesamt ergibt sich hierdurch der Vorteil einer verlängerten Standzeit und einer verbesserten Spanableitung.

Die Schneidkante ist vorteilhafterweise bezogen auf eine Mittelachse, die der Länge nach durch das Sägeblatt führt, symmetrisch ausgeführt, so dass der Radiusmittelpunkt der Schneidkante auf der Mittelachse liegt. Gegebenenfalls kommen aber auch asymmetrische Ausführungen der Schneidkante in Betracht, bei denen der Radiusmittelpunkt mit seitlichem Abstand zur Mittelachse liegt.

An der Schneidkante sind zweckmäßigerweise Sägezähne angeordnet, wobei sich der Radius sowohl auf den Zahngrund als auch auf die Zahnspitzen beziehen kann.

Der Radius der Schneidkante ist beispielsweise so bemessen, dass der Mittelpunkt außerhalb des Befestigungsabschnittes liegt. Der Schneidkantenradius ist beispielsweise 10 %, 20 % oder 30 % größer als der Abstand zwischen der Drehachse und der Schneidkante.

Grundsätzlich kommt anstelle einer teilkreisförmigen Schneidkante auch eine polygonförmig ausgebildete Schneidkante in Betracht, die insgesamt ebenfalls gebogen ausgeführt ist. Auch in diesem Fall ist die gebogene Schneidkante weniger stark gekrümmt als ein Kreisbogen mit einem Radius, der dem Abstand zwischen der Drehachse des Sägeblatts und der Schneidkante entspricht, so dass wie bei der teilkreisförmigen Schneidkante der Vorteil erzielt wird, dass bei der Werkstückbearbeitung bei der Drehrichtungsumkehrung ein keil- bzw. spaltförmiger Freiraum zwischen den Schneidzähnen und dem Werkstück besteht, über den die bei der Werkstückbearbeitung anfallenden Späne leichter abgeführt werden können.

Das Sägeblatt ist vorzugsweise als ein Tauchsägeblatt ausgeführt.

Weitere Vorteile und zweckmäßige Ausführungen sind den weiteren Ansprüchen, der Figurenbeschreibung und den Zeichnungen zu entnehmen. Es zeigen:
- Fig. 1: in perspektivischer Ansicht ein Sägeblatt mit einem rechteckförmigen Stammblatt, dessen Vorderkante als teilkreisförmige Schneidkante ausgeführt ist, und mit einem Befestigungsabschnitt zur Befestigung an einer Werkzeugwelle,
- Fig. 2: das Sägeblatt in Draufsicht.

In den Figuren sind gleiche Bauteile mit gleichen Bezugszeichen versehen.

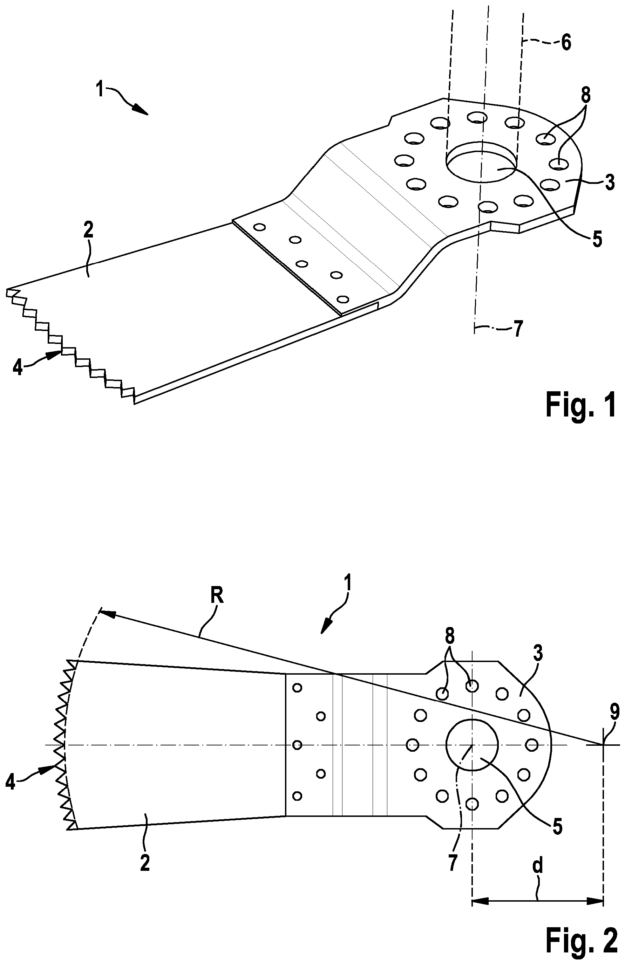

In Fig. 1 ist ein als Tauchsägeblatt ausgeführtes Sägeblatt 1 für eine Handwerkzeugmaschine mit Drehoszillationsantrieb dargestellt. Das Sägeblatt 1 umfasst ein Stammblatt 2, welches plattenförmig mit annähernd rechteckförmiger, gegebenenfalls leicht trapezförmiger Geometrie ausgeführt ist, und einen Befestigungsabschnitt 3, über den das Sägeblatt 1 mit einer Werkzeugwelle 6 der Handwerkzeugmaschine verbunden wird. Die dem Befestigungsabschnitt 3 abgewandte Vorderkante des Stammblattes 2 ist als Schneidkante 4 mit Schneidzähnen ausgeführt.

In den im Wesentlichen scheibenförmigen Befestigungsabschnitt 3 ist eine zentrale Befestigungsausnehmung 5 zur Aufnahme der Werkzeugwelle 6 eingebracht. Die Befestigung erfolgt mittels einer geeigneten Befestigungseinrichtung, wobei zur Drehmomentübertragung in den Befestigungsabschnitt 3 ringförmig um die Befestigungsausnehmung 5 angeordnete Rastöffnungen 8 eingebracht sind, in die im montierten Zustand Rastnoppen der Befestigungseinrichtung einragen, um das Drehmoment von der Werkzeugwelle auf das Sägeblatt 1 zu übertragen. Die Wellenachse der Werkzeugwelle 6 fällt im montierten Zustand mit der Drehachse 7 durch die Befestigungsausnehmung 5 im Befestigungsabschnitt 3 zusammen. Um die Drehachse 7 wird bei der Werkstückbearbeitung das Sägeblatt 1 in oszillierender Weise verschwenkt.

Sowohl das Stammblatt 2 als auch der Befestigungsabschnitt 3 sind in sich eben ausgeführt. Da Sägeblatt 1 ist gekröpft ausgebildet, das Stammblatt 2 und der Befestigungsabschnitt 3 liegen in parallel versetzten Ebenen. Das Stammblatt 2 und der Befestigungsabschnitt 3 sind als separate Bauteile ausgeführt, die über einen Verbindungsabschnitt fest miteinander verbunden sind.

Die Schneidkante 4 mit den Schneidzähnen ist teilkreisförmig ausgebildet. In Fig. 2 ist der Radius R der Schneidkante 4 dargestellt. Der Mittelpunkt 9 des Radius R der Schneidkante 4 liegt außerhalb des Befestigungsabschnittes 3. Der Radius R ist größer als der Abstand zwischen der Drehachse 7, welche durch die Befestigungsausnehmung 5 führt, und der Schneidkante 4. Aufgrund des vergrößerten Radius R der Schneidkante 4 entstehen bei der Drehoszillationsbewegung des Sägeblatts 1 bei der Drehrichtungsumkehrung Freiräume zwischen der Schneidkante 4 und dem zu bearbeitenden Werkstück, über die die Spanabfuhr verbessert ist.

Der Radius R ist signifikant größer als der Abstand zwischen der Drehachse 7 und der Schneidkante 4. Beispielsweise beträgt der Radius R das 1.25-fache des Abstandes zwischen der Drehachse 7 und der Schneidkante 4. In Betracht kommen aber auch kleinere oder auch größere Werte, beispielsweise das 1.5-fache oder das 2-fache.

## Patentansprüche

1. Sägeblatt (1) mit einem kreissegmentförmigen oder zumindest annähernd rechteckförmigen Stammblatt (2), das eine teilkreisförmig ausgebildete Schneidkante (4) aufweist, wobei in einen mit dem Stammblatt (2) verbundenen Befestigungsabschnitt (3) eine Befestigungsausnehmung (5) zur Aufnahme einer Werkzeugwelle (6) eingebracht ist und eine Drehachse (7) durch die Befestigungsausnehmung (5) verläuft, **dadurch gekennzeichnet, dass** die Schneidkante (4) einen Radius (R) aufweist, der den Abstand zwischen der Drehachse (7) des Sägeblatts (1) und der Schneidkante (4) übersteigt, wobei der Mittelpunkt (9) des Radius (R) der Schneidkante (4) außerhalb des Befestigungsabschnitts (3) liegt, und wobei der Radius (R) zumindest das 1,25-fache des Abstand zwischen Drehachse und der Schneidkante (4) beträgt.

2. Sägeblatt (1) nach Anspruch 1, **dadurch gekennzeichnet, dass** die Schneidkante (4) teilkreisförmig ausgebildet ist und einen Radius aufweist, der den Abstand zwischen der Drehachse (7) des Sägeblatts (1) und der Schneidkante (4) übersteigt.

3. Sägeblatt (1) nach Anspruch 1 oder 2, **dadurch gekennzeichnet, dass** die Schneidkante (4) polygonförmig ausgebildet ist.

4. Sägeblatt (1) nach einem der Ansprüche 1 bis 3, **dadurch gekennzeichnet, dass** die Schneidkante (4) Schneidzähne aufweist.

5. Sägeblatt (1) nach einem der vorhergehenden Ansprüche, **dadurch gekennzeichnet, dass** der Befestigungsabschnitt (3) einteilig mit dem Stammblatt (2) ausgebildet ist.

6. Sägeblatt (1) nach einem der vorhergehenden Ansprüche, wobei das Sägeblatt (1) ein Drehoszillationssägeblatt für eine Werkzeugmaschine ist.

7. Sägeblatt (1) nach einem der vorhergehenden Ansprüche, wobei das Sägeblatt (1) ein Drehoszillationssägeblatt für eine Handwerkzeugmaschine ist.

8. Werkzeugmaschine mit einem Sägeblatt (1) nach einem der Ansprüche 1 bis 7.

9. Werkzeugmaschine nach Anspruch 8, wobei die Werkzeugmaschine eine Handwerkzeugmaschine ist.
